# EUROPÄISCHE PATENTSCHRIFT

(11) **EP 2 984 453 B1**
(45) Veröffentlichungstag und Bekanntmachung des Hinweises auf die Patenterteilung: **22.03.2017**
(21) Anmeldenummer: 14705037.1
(22) Anmeldetag: 14.02.2014
(51) Int. Cl.: G01C 21/36, G06F 3/0481, G06T 3/40, G06T 11/20, G06F 3/0484

(54) **METHODE ZUR AUFLÖSUNG UND BEDIENUNG VON POI-STAPELN**
METHOD FOR RESOLVING AND OPERATING POI STACKS
MÉTHODE POUR PERMETTRE LA RESTITUTION ET L'UTILISATION DE GROUPES DE POI

(30) Priorität: 08.04.2013 DE 102013006025
(43) Veröffentlichungstag der Anmeldung: 17.02.2016
(73) Patentinhaber: Audi AG, 85045 Ingolstadt (DE)
(72) Erfinder: ANGELESCU, Emanuel, 50858 Köln (DE)
(74) Vertreter: Bauer, Dominik Michael
(86) Internationale Anmeldenummer: PCT/EP2014/000409
(87) Internationale Veröffentlichungsnummer: WO 2014/166564

(56) Entgegenhaltungen:
- DE-A1-102007 037 386
- JP-A- 2010 085 199

## Beschreibung

Die vorliegende Erfindung betrifft ein Verfahren und ein System zur Auflösung und Bedienung von POI-Stapeln in einer auf einer Bildschirmfläche dargestellten virtuellen Umgebung.

Eine Navigation in einer virtuellen Umgebung stellt einen Nutzer vor hohe Anforderungen. Speziell in virtuellen Umgebungen, welche Zusatzinformationen durch auswählbare Elemente bereitstellen, ist ein hohes Maß an Aufmerksamkeit des Nutzers notwendig, um die dargebotenen Informationen sinnvoll zu verwalten. Insbesondere ein Wechsel von einer angewandten Bedienlogik, wie bspw. ein Wechsel von einer fadenkreuzbasierten Scroll-Ansicht zu einer listenbasierten Elementauswahl erfordert von dem Nutzer eine komplette Neuorientierung unter Abstraktion der bereits durchgeführten Operationen in der fadenkreuzbasierten Scroll-Ansicht. Diese Neuorientierung ist nicht nur störend für die Nutzererfahrung im Umgang mit der virtuellen Umgebung, sondern führt speziell im Straßenverkehr zu gefährlichen Aufmerksamkeitsdefiziten.

Erfindungsgemäß werden sowohl ein Verfahren als auch ein System bereitgestellt, welche eine einzige Bedienlogik für die Navigation in einer virtuellen Umgebung und in einer Liste an auswählbaren Elementen verwenden. Unter einem Element ist im Kontext des erfindungsgemäßen Verfahrens bzw. des erfindungsgemäßen Systems ein Teil eines Stapels, insbesondere eines Stapels, welcher eine Menge an Points of Interest (POIs) darstellt, zu verstehen. Ein Point of Interest, im Deutschen auch "Ort von Interesse" (OVI) genannt, ist ein geläufiger Begriff im Zusammenhang mit Navigationssystemen und indiziert einen Ort, der für einen Nutzer einer Karte Bedeutung haben könnte.

Durch Anwendung der einzigen Bedienlogik für die Navigation in einer virtuellen Umgebung und in der Liste an auswählbaren Elementen werden sowohl die Neuorientierung als auch die Abstraktion der bereits durchgeführten Operationen des Nutzers überflüssig und dessen Aufmerksamkeitsressourcen geschont.

In der DE 102 30 479 A1 wird eine Fahrerinformationsvorrichtung offenbart, welche für den Fall, dass sich an einer Position in der Karte mehrere besondere Objekte befinden, an Stelle eines einzelnen Symbols für jedes dieser Objekte, ein gemeinsames Hinweissymbol angezeigt, innerhalb dessen wiederum ein Auswahlmenü zur Auswahl einzelner besonderer Objekte angezeigt wird. Dafür wird ein halbtransparentes Auswahlfenster über eine auf einer Kartenansicht basierenden Scrollebene gelegt und die Kartenansicht in einem Grauton dargestellt.

In der WO 2012/110882 A1 ist eine Vorrichtung zum Anzeigen von Karteninformationen offenbart, welche einen Bildschirm zur Darstellung der Karteninformationen sowie ein Navigationsgerät umfasst. Dabei werden Informationen über Standorte in der Umgebung einer dargestellten Route derart auf dem Bildschirm eingeblendet, dass sie sich in die momentane Kartendarstellung integrieren. D. h., es werden Informationen über (POIs) aus der Peripherie derart in eine aktuelle Routenführung eingebunden, dass sich Verbindungen zwischen POIs der aktuellen Route und POIs in der Peripherie darstellen lassen. Dazu werden Kombinationssymbole verwendet, welche sowohl Informationen peripherer POIs als auch Informationen aktueller POIs enthalten.

In der DE 10 2007 030 229 A1 sind ein Verfahren und eine Vorrichtung zur verdeckungsarmen Darstellung dicht benachbarter topographischer Objekte in stilisierter Form offenbart. Dabei werden die topographischen Objekte derart in eine dargestellte geographische Karte integriert, dass durch eine zeitlich und/oder räumlich versetzte Darstellung und/oder in einer Dimension außerhalb der Kartenebene versetzten Darstellung und/oder in einer überlagerten Darstellung mit Verknüpfung zu einem Popupfenster, in dem die Überlagerung der stilisiert dargestellten topographischen Objekte zumindest teilweise aufgehoben wird, und/oder durch eine Änderung des Maßstabes der dargestellten Karte im Bereich der stilisiert dargestellten topographischen Objekte vermieden wird. Dabei sollen POIs mit völlig identischen oder dicht benachbarten geographischen Positionen mit möglichst geringer gegenseitiger Verdeckung und ohne Beeinträchtigung eines Kartenbildes in elektronisch anzeigbare Landkarten integriert werden. Dies wird durch Einsatz eines sogenannten toggling Verfahrens erreicht, bei dem Objekte zyklisch wechselnd angezeigt werden. Um in einem Kartenbereich mit mehreren dicht benachbarten POIs einen Maßstabswechsel zu vollziehen, muss dieser Vorgang von einem Nutzer initiiert werden. Ein derart vorausgewählter Kartenausschnitt kann innerhalb der ursprünglich dargestellten Karte in einem Fenster oder Popupfenster dargestellt werden. Im Falle eines Popupfensters wird die Orientierung des Nutzers dadurch erleichtert, dass eine ausgezogene Spitze des Popupfensters ein geographisches Verbindungselement mit der ursprünglichen Position des Elements auf der geographischen Karte bildet.

In der US 2004/0243306 A1 sind ein Verfahren und eine Vorrichtung für ein Navigationssystem offenbart. Das Verfahren umfasst dabei die Schritte des Spezifizierens von POIs auf einem vorausgewählten Kartenabschnitt, eine radiale Anordnung einzelner POIs von POI-Stapeln um das Zentrum des vorausgewählten Kartenabschnitts herum sowie eine Anzeige derjenigen Positionen auf der Karte, an welchen sich die POIs vor dem Schritt der radialen Anordnung befanden, durch Verbdingungslinien. Eine Orientierung des Nutzers auf der Kartenebene soll dabei dadurch erleichtert werden, dass radiale Randzonen, welche einen definierten Abstand zum Zentrum des ausgewählten Kartenabschnitts aufweisen, eingeblendet werden. Ferner verwendet das offenbarte Verfahren eine Funktion zur Verschiebung von einzelnen POIs relativ zu einem im Zentrum der Karte angezeigten Auswahlsymbol.

Schließlich ist in der DE 10 2007 037 386 A1 ein Verfahren zum Betrieb eines Navigationssystems offenbart. Das Verfahren umfasst dabei folgende Verfahrensschritte:
a) Berechnung und Anzeige einer Kartenansicht an einer Anzeigeeinrichtung, wobei die Kartenansicht zumindest einen Ausschnitt eines geographischen Gebiets darstellt;
b) Selektion von den hervorzuhebenden Orten, die im Bereich des dargestellten geographischen Gebiets liegen und in der Kartenansicht jeweils einem POI zugeordnet sind, aus einer Datenbank;
c) Darstellung der POIs in der Kartenansicht, wobei POIs, die hervorzuhebende Orte innerhalb eines gemeinsamen Nahbereichs symbolisieren, als gemeinsames Kombinationssymbol dargestellt werden, so dass jeweils ein Kombinationssymbol mehrere POIs repräsentiert, wobei das Kombinationssymbol zumindest einen Anzeigebereich aufweist, in dem zumindest ein POI darstellbar ist, wobei die dem Kombinationssymbol zugeordneten POIs zeitlich wechselnd im Anzeigebereich angezeigt werden.

Dabei ist das Kombinationssymbol, welches mehrere POIs umfasst, grafisch so zu gestalten, dass es einen Stapel mit zumindest einer Tafel symbolisiert. Wird ein Kombinationssymbol vom Nutzer ausgewählt, so werden alle POIs gleichzeitig nebeneinander angezeigt.

Vor diesem Hintergrund ist es eine Aufgabe der Erfindung, die Navigation in einer virtuellen Umgebung dahingehend zu erleichtern, dass diese aufmerksamkeitsschonend und mittels einer einzigen Bedienlogik durchgeführt werden kann.

Diese Aufgabe wird erfindungsgemäß durch ein Verfahren mit den Merkmalen des unabhängigen Patentanspruchs 1 und ein System mit den Merkmalen des unabhängigen Patentanspruchs 8 gelöst. Weitere Vorteile und Ausgestaltungen der Erfindung ergeben sich aus der Beschreibung und der beiliegenden Zeichnung sowie den jeweiligen Unteransprüchen.

Im Kontext des vorliegenden erfindungsgemäßen Verfahrens bzw. Systems ist unter Point of Interest (POI) jeder Punkt einer virtuellen Umgebung zu verstehen, welcher von prinzipiellem Interesse für einen Nutzer sein könnte und entweder von dem Nutzer selbst ausgewählt oder aufgrund besonderer Eigenschaften bereits originär durch die virtuelle Umgebung selbst hervorgehoben wird. Dies sind insbesondere Punkte von touristischer, verkehrstechnischer, kulinarischer, logistischer oder geographischer Relevanz.

Erfindungsgemäß wird nunmehr ein Verfahren bereitgestellt, welches zur Auflösung und Bedienung von POI-Stapeln in einer auf einer Bildschirmfläche dargestellten virtuellen Umgebung dient, wobei bei Auswahl eines ersten POI-Stapels mit einer in dem POI-Stapel enthaltenen Menge an POIs, die Darstellung der virtuellen Umgebung automatisch derart skaliert wird, dass in dem ersten POI-Stapel enthaltene POIs auf der Bildschirmfläche so dargestellt werden, dass einzelne POIs bei korrekter Positionierung in der virtuellen Umgebung eine Mindestgröße und einen Mindestabstand zu jeweiligen Nachbar-POIs wahren, und falls der Mindestabstand nicht eingehalten werden kann, eine Teilmenge der Menge an POIs des ersten POI-Stapels in Abhängigkeit der jeweiligen Position der einzelnen POIs in der virtuellen Umgebung in mindestens einem zweiten POI-Stapel zusammengefasst wird.

Bei einer Navigation durch virtuelle Umgebungen, insbesondere bei der Navigation durch virtuelle geographische Karten, welche eine Vielzahl an Zusatzinformationen in Form von POIs bereitstellen, ist eine Darstellung der gesamten Informationsmasse problematisch. Der potentielle Informationsgehalt, welcher auf einem Bildschirm dargestellt werden kann, ändert sich durch den jeweils dargestellten Maßstab und durch die Anzahl der POIs, welche auf dem jeweiligen dargestellten geographischen Areal zu finden sind. Ist der dargestellte Maßstab klein, d. h. die Maßstabszahl groß, wie bspw. 1:100000, so ist die potentiell darzustellende Informationsmenge, welche durch POIs bereitgestellt wird, sehr groß. Die Darstellung aller in Frage kommender POIs würde die dargestellte geographische Karte überlagern und eine Navigation wäre, insbesondere in Städten, unmöglich. Um dennoch eine Übersicht von sowohl der geographischen Karte als auch den POIs zu ermöglichen, werden die POIs häufig zu Stapeln zusammengefasst und als Stapel auf der geographischen Karte angezeigt.

Ist der dargestellte Maßstab groß, d. h. die Maßstabszahl klein, wie bspw. 1:10, so ist die potentiell darzustellende Informationsmenge, welche durch POIs bereitgestellt wird, meist klein. Daher können die POIs meist einzeln dargestellt und die Möglichkeit zur Navigation aufrecht erhalten werden.

Erfindungsgemäß wird eine Fusion aus beiden benannten Darstellungsmethoden dadurch bereitgestellt, dass durch Auswahl eines in einem kleinen Maßstab angezeigten POI-Stapels eine Änderung des dargestellten Maßstabs der geographischen Karte dahingehend bewirkt wird, dass dieser solange vergrößert wird, bis alle oder zumindest ein Teil der in dem POI-Stapel enthaltenen POIs bei korrekter Positionierung in der virtuellen Umgebung einzeln dargestellt werden können und eine Navigation dennoch möglich ist.

Ist die Anzahl der darzustellenden POIs dennoch zu groß, um diese sinnvoll, d. h. derart darzustellen, dass eine Navigation auf der geographischen Karte noch möglich ist, so wird ein Teil der POIs, weiche sich in geographischer Nähe zueinander befinden, in einem weiteren, in der Regel kleineren POI-Stapel zusammengefasst. Dieser ist erneut auswählbar, was zu einer erneuten Reskalierung des Maßstabs der Darstellung führen kann. Ist der größtmögliche Maßstab bereits erreicht, so werden die in dem weiteren POI-Stapel enthaltenen POIs geographisch abstrahiert dargestellt und dadurch eine Auswahl mittels derselben Bedienlogik wie sie zuvor verwendet wurde, ermöglicht.

Eine Navigation innerhalb eines ausgewählten POI-Stapels erfolgt dabei erfindungsgemäß in der gleichen Bedienlogik wie sie der Navigation in der virtuellen Umgebung zugrunde liegt. Die Navigation in der virtuellen Umgebung kann dabei über Eingabegeräte, wie eine Computermaus, eine Tastatur, ein berührungsempfindliches Feld, durch eine berührungsempfindliche Bildschirmfläche, durch eigens zu diesem Zweck gestaltete Eingabegeräte, insbesondere durch Drehräder und/oder Drehschalter und/oder Dreh-Drück-Steller, bedient werden.

Gemäß einer möglichen Ausführungsform des erfindungsgemäßen Verfahrens ist vorgesehen, dass der Mindestabstand in Abhängigkeit eines Schwellenwertes gebildet wird, wobei der Schwellenwert dynamisch und in Abhängigkeit einer verfügbaren Bildschirmfläche und der Gesamtanzahl darzustellender POIs errechnet wird, so dass eine maximale Anzahl an POIs resultiert, welche sinnvoll bei korrekter Positionierung in der virtuellen Umgebung gleichzeitig dargestellt werden können.

Um die POIs eines ausgewählten Stapels sinnvoll darzustellen, ist erfindungsgemäß vorgesehen, dass die Bildung neuer POI-Stapel aus einer Teilmenge an POIs des ausgewählten POI-Stapels und in Abhängigkeit des voranstehend genannten Schwellenwerts abläuft. Dieser Schwellenwert ist dynamisch, d. h. er ändert sich abhängig davon, wie viele POIs tatsächlich dargestellt werden müssen und welcher Maßstab für das geographische Gebiet von Interesse verfügbar ist.

Zur Berechnung des Schwellenwertes wird anhand der verfügbaren Bildschirmfläche auf dem Bildschirm, welche abhängig ist von der Auflösung des Bildschirms, der physischen Größe des Bildschirms, einer gewünschten Lesbarkeit und zusätzlich eingeblendeten POIs, eine maximale Anzahl von POIs errechnet, welche sinnvoll bei korrekter Positionierung gleichzeitig dargestellt werden können. Übersteigt die tatsächliche Anzahl vorhandener POIs innerhalb eines POI-Stapels den errechneten Wert, werden solange neue POI-Stapel gebildet, bis die Anzahl darzustellender Symbole mit dem errechneten Schwellenwert übereinstimmt.

Ferner ist vorgesehen, dass die POIs eines POI-Stapels in Abhängigkeit des errechneten Schwellenwertes zu POI-Stapeln zusammengefasst und abstrahiert dargestellt werden, falls jede mögliche, d. h. auswählbare Skalierung der Darstellung der virtuellen Umgebung für eine maßstabsgetreue Darstellung der POIs unzureichend ist.

In einzelnen Fällen kann es vorkommen, dass die POIs eines POI-Stapels auch bei Verwendung des größtmöglichen Maßstabs nicht getrennt dargestellt werden können. Dies ist insbesondere bei Hochhäusern der Fall, in denen sich auf derselben geographischen Position eine Vielzahl an POIs befindet. Um diese POIs dennoch innerhalb derselben Benutzerlogik darstellen zu können, werden diese in ihrer geographischen Position abstrahiert dargestellt. Das bedeutet, die POIs werden in einer von der geographischen Karte optisch unterscheidbaren Ebene angeordnet und dort zur Auswahl gestellt.

Weiterhin ist vorgesehen, dass die Auswahl der POIs innerhalb derselben Bedienlogik abläuft, wie sie zur Navigation in der virtuellen Umgebung genutzt wird.

Erfindungsgemäß ist vorgesehen, dass die Bedienlogik, die zur Navigation innerhalb der virtuellen Umgebung eingesetzt wird, also die Art und Weise, wie der Nutzer mit dem erfindungsgemäßen Verfahren bzw. dem erfindungsgemäßen System umgeht und diesem Eingaben zur Verfügung stellt, bei der Auswahl eines POI-Stapels erhalten bleibt. Insbesondere in Situationen, in denen eine Bedienung des Systems mit geringer Aufmerksamkeit durchgeführt werden soll, wie bspw. beim Führen eines Kraftfahrzeugs, ist eine Änderung in der Bedienlogik, wie dies bspw. bei einem Wechsel von einer Darstellung einer Karte in eine tabellarische Darstellung einer Liste häufig erfolgt, störend für den Nutzer, da dieser sich neu orientieren und die bereits geleistete Orientierungsleistung abstrahieren muss. Weiterhin können unter Beibehaltung derselben Bedienlogik bereits verwendete Eingabewerkzeuge beibehalten werden. Dadurch erfolgt die Bedienung ausgewählter POI-Stapel in vereinfachter Weise.

In weiterer Ausgestaltung des erfindungsgemäßen Verfahrens ist vorgesehen, dass das einem Positionsanzeiger nächstliegende Element automatisch vorausgewählt wird.

Mittels eines Auswahlwerkzeugs, bspw. in Form eines Fadenkreuzes, navigiert der Nutzer über die geographische Karte und in den ausgewählten POI-Stapeln. Sobald ein POI-Stapel vom Nutzer ausgewählt wird, wird der POI-Stapel in seine Bestandteile, also die in dem POI-Stapel enthaltenen POIs aufgespalten und die Darstellung der jeweiligen virtuellen Umgebung erfolgt in einem angepassten Maßstab. Weiterhin erscheint der dem Auswahlwerkzeug nächstliegende POI als vorausgewählt, d. h. optisch wie logisch hervorgehoben. Erfindungsgemäß ermöglicht diese Vorauswahl eine kurze und aufmerksamkeitsentlastende Navigation innerhalb des POI-Stapels.

Somit ist es möglich, dass zur Verdeutlichung einer Auswahl eines Elements eine optische und logische Verbindung zwischen einem Auswahlwerkzeug und einem ausgewählten Element dargestellt wird.

Insbesondere bei Eingaben eines Fahrers eines Kraftwagens ist eine aufmerksamkeitsschonende Übermittlung von Informationen wünschenswert. Dafür ist die optische Darstellung von besonderer Bedeutung. Um die aktuelle Auswahl eines POIs bzw. POI-Stapels darzustellen, wird die logische Verbindung zwischen Auswahlwerkzeug und ausgewähltem POI bzw. POI-Stapel in einer möglichen Ausgestaltung der Erfindung auch optisch hervorgehoben, in dem eine Verbindung, insbesondere eine gefärbte Verbindung angezeigt wird. Die dargestellte Auswahl kann erfindungsgemäß unmittelbar vom Nutzer erfasst und intuitiv bedient werden.

In einer weiteren Ausgestaltung des erfindungsgemäßen Verfahrens ist vorgesehen, dass benutzerinitiiert eine Routenführung zu einem ausgewählten Element gestartet wird.

Um das erfindungsgemäße Verfahren in einem Navigationsgerät sinnvoll betreiben zu können, ist es unerlässlich, dass der Nutzer eine Routenführung von seiner derzeitigen Position, welche bspw. per Satellitennavigation ermittelt wird, hin zu einem von ihm ausgewählten POI anfordern kann.

Ferner betrifft die vorliegende Erfindung ein System zur Auflösung und Bedienung von POI-Stapeln in einer virtuellen Umgebung, wobei das System mindestens ein Anzeigemedium zur Darstellung einer geographischen Karte sowie darauf enthaltener POIs und eine Vorrichtung zur Eingabe von Nutzerbefehlen umfasst, wobei ein Nutzer das System durch die Vorrichtung bedienen und mittels einer Bedienlogik durch sowohl die virtuelle Umgebung als auch innerhalb der POI-Stapel navigieren kann.

Dabei kann zur Darstellung der geographischen Karte sowie der darauf enthaltenen POIs jede technisch geeignete Bildschirmfläche, insbesondere die Bildschirmfläche eines LCD- oder LED-Bildschirms verwendet werden. Um die Eingabe der Nutzerbefehle entgegenzunehmen eigenen sich insbesondere Vorrichtungen der folgenden Liste: Drehschalter, Dreh-Drückschalter, berührungsempfindliche Bildschirme, Computermäuse sowie eine Eingabe mittels Sprache.

In einer weiteren Ausgestaltung des erfindungsgemäßen Systems ist vorgesehen, dass eine jeweilige Position des Nutzers über einen GPS-Empfänger ermittelt und an das System übertragen wird.

Für eine Verwendung des erfindungsgemäßen Systems als Navigationssystem ist es erforderlich, die jeweilige Position des Nutzers zu bestimmen und die virtueile Umgebung in Relation zu dieser Position darzustellen.

Im Gegensatz zur Verwendung einer von den Informationen der geographischen Karte getrennt dargestellten Listenansicht für an einer geographischen Position aggregierte POIs, wie bspw. in der DE 102 30 479 A1 oder der DE 2007 030 229 A1 offenbart, sieht das erfindungsgemäße Verfahren eine Einbindung der POIs in die zugrundeliegende geographische Karte vor. Eine Abstraktion von Wissen auf die POIs, welches auf der geographischen Karte bereits ermittelt wurde, ist nicht nötig, da die POIs innerhalb der geographischen Karte dargestellt werden. Dabei kann das erfindungsgemäße Verfahren auch in bestehende Systeme und/oder Verfahren zur Navigation in virtuellen Umgebungen eingebunden werden.

Ein möglicher Weg um POI-Stapel elementweise aufzulösen, ist in der US 2004/0243306 A1 offenbart, in der eine Vielzahl an POIs in einem Kartenareal automatisch von ihrer geographischen Lage unabhängig, radial und vergrößert um das Zentrum des Bildschirms herum angeordnet werden. Dabei dienen Hinweislinien, welche von dem jeweiligen POI zu der entsprechenden Position auf der geographischen Karte deuten, als Hinweis auf die tatsächliche geographische Lage der zugehörigen POIs. Diese Art der Darstellung erfordert ein hohes Maß an Aufmerksamkeit, da sowohl eine Nachverfolgung der einzelnen Hinweislinien als auch eine Auswahl der einzelnen POIs mittels einer getrennten listenbasierten Bedienlogik geleistet werden muss. Das erfindungsgemäße Verfahren bzw. System löst die genannte Aufgabe dadurch, dass eine Entlastung des Nutzers durch aufmerksamkeitsschonende Prozesse vorgesehen ist. Da der Nutzer sich nur innerhalb einer einzigen Bedienlogik orientieren muss, erfolgt eine Bedienung des erfindungsgemäßen Verfahrens bzw. Systems intuitiv und effektiv.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

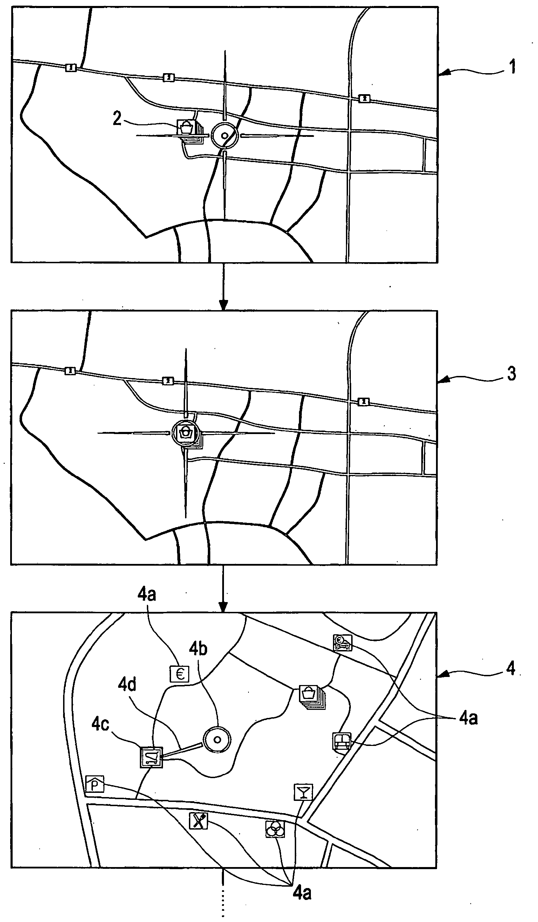

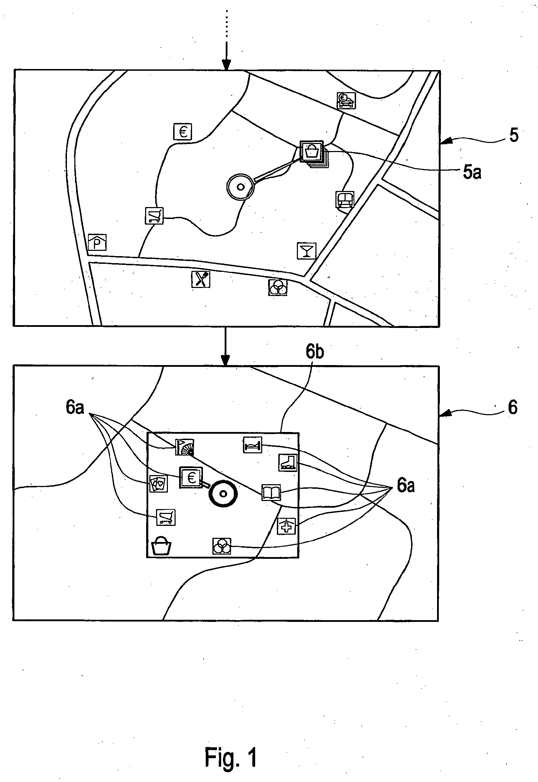

Figur 1 zeigt einen schematischen Ablauf einer Auswahl eines POIs aus einem POI-Stapel gemäß einer Ausführungsform des erfindungsgemäßen Verfahrens.

In einer Ausgangssituation 1 navigiert ein Nutzer mittels eines geeigneten Eingabegerätes, wie bspw. einem Drehschalter oder einem berührungsempfindlichen Bildschirmfeld über eine geographische Karte. Dabei wird dem Nutzer ein Auswahlwerkzeug in Form eines Fadenkreuzes dargestellt. Mittels des Auswahlwerkzeugs ist es dem Nutzer möglich, sich auch bei kleinen Maßstäben schnell innerhalb der geographischen Karte zu orientieren. Da unter Verwendung eines kleinen Maßstabs nur kleine Flächen in der virtuellen Umgebung für eine Darstellung eines jeweiligen Areals zur Verfügung stehen, können diejenigen Informationen, die zu einzelnen Points of Interest (POI) gehören, nur durch Überdeckung eines weiteren Areals auf der geographischen Karte und damit einhergehendem Informationsverlust, dargestellt werden.

Um diesem Informationsverlust vorzubeugen, werden mehrere POIs in einem oder mehreren POI-Stapeln 2 zusammengefasst. Wünscht der Nutzer Informationen über einzelne POIs des POI-Stapels 2, so kann dieser vom Nutzer durch das Auswahlwerkzeug ausgewählt werden, wie in Darstellung 3 gezeigt, und das erfindungsgemäße Verfahren bewirkt automatisch eine Reskalierung des Maßstabs, wie in Darstellung 4 gezeigt, sowie eine Darstellung einzelner POIs 4a des POI-Stapels. Dabei werden die einzelnen POIs 4a derart arrangiert, dass diese sinnvoll auswählbar sind, d. h., dass die einzelnen POIs einen Mindestabstand zueinander und eine Mindestgröße haben. Zur erleichterten Bedienung durch den Nutzer, ändert sich die Darstellung des Auswahlwerkzeugs 4b und der dem Auswahlwerkzeug nächstgelegene POI 4c wird automatisch vorausgewählt. Das Auswahlwerkzeug zeigt eine logische Verbindung zwischen der Position des Auswahlwerkzeugs und dem vorausgewählten POI 4c in Form einer sich verjüngenden Linie 4d. Durch Verschiebung des Auswahlwerkzeugs in Richtung eines POIs durch eine Nutzereingabe kann die Auswahl zwischen den dargestellten POIs gewechselt werden, wie in Darstellung 5 gezeigt.

Ist eine Einzeldarstellung nicht für alle POIs eines POI-Stapels möglich, so wird durch einen erfindungsgemäßen dynamischen Prozess eine Teilmenge der POIs des POI-Stapels erneut zu einem POI-Stapel 5a zusammengefasst. Da diese POI-Stapel meist mehrere an derselben geographischen Position liegende POIs umfassen, werden die POIs der POI-Stapel bei Auswahl durch den Nutzer, in einer geographisch abstrahierten Form dargestellt, wie in Darstellung 6 gezeigt, um dem Nutzer dennoch eine intuitive Übersicht und eine erleichterte Auswahl der korrespondierenden POIs zu ermöglichen. Die abstrahierte Darstellung wird dabei durch eine grafische Hervorhebung der auswählbaren POIs 6a, z.B. in Form einer grauen Umrandung 6b umgesetzt. Dabei erfolgt ein Auswahlvorgang durch den Nutzer innerhalb derselben Bedienlogik, wie sie der Navigation in der geographischen Karte bereits in kleinerem Maßstab, wie in Darstellung 1 gezeigt, zugrunde liegt.

## Patentansprüche

1. Verfahren zur Auflösung und Bedienung von POI-Stapeln in einer auf einer Bildschirmfläche dargestellten virtuellen Umgebung, wobei bei Auswahl eines ersten POI-Stapels mit einer in dem POI-Stapel enthaltenen Menge an POIs durch einen Nutzer der Bildschirmfläche, die Darstellung der virtuellen Umgebung automatisch derart skaliert wird, dass in dem ersten POI-Stapel enthaltene POIs auf der Bildschirmfläche so dargestellt werden, dass einzelne POIs bei korrekter Positionierung in der virtuellen Umgebung eine Mindestgröße und einen Mindestabstand zu jeweiligen Nachbar-POIs wahren, und falls der Mindestabstand nicht eingehalten werden kann, eine Teilmenge der Menge an POIs des ersten POI-Stapels in Abhängigkeit der jeweiligen Position der einzelnen POIs in der virtuellen Umgebung in mindestens einem zweiten POI-Stapel zusammengefasst wird, wobei der Mindestabstand in Abhängigkeit eines Schwellenwertes gebildet wird, welcher dynamisch und in Abhängigkeit der verfügbaren Bildschirmfläche und der Gesamtanzahl darzustellender POIs errechnet wird.

2. Verfahren nach einem der Ansprüche 1, wobei eine Auswahl der POIs innerhalb derselben Bedienlogik abläuft, wie sie für eine Navigation in der virtuellen Umgebung genutzt wird.

3. Verfahren nach einem der Ansprüche 1 oder 2, wobei die POIs des ersten POI-Stapels abstrahiert dargestellt werden, falls die Skalierung der Darstellung der virtuellen Umgebung für eine Darstellung der POIs in ihrer jeweiligen Position in der virtuellen Umgebung unzureichend ist.

4. Verfahren nach einem der Ansprüche 1 bis 3, wobei der einem Positionsanzeiger nächstliegende POI vorausgewählt wird und diese Vorauswahl durch ein verändertes Fadenkreuz dargestellt wird:

5. Verfahren nach einem der Ansprüche 1 bis 4, wobei zur Verdeutlichung einer Auswahl eines POIs eine optische und logische Verbindung zwischen einem Auswahlwerkzeug und dem ausgewählten POI dargestellt wird.

6. Verfahren nach einem der Ansprüche 1 bis 5, wobei benutzerinitiiert eine Routenführung zu einem ausgewählten POI gestartet wird.

7. System zur Auflösung und Bedienung von POI-Stapeln in einer virtuellen Umgebung, wobei das System mindestens ein Anzeigemedium zur Darstellung einer virtuellen Umgebung sowie darauf enthaltener POIs und eine Vorrichtung zur Eingabe von Nutzerbefehlen umfasst, wobei ein Nutzer das System durch die Vorrichtung bedienen und mittels einer Bedienlogik durch sowohl die geographische Karte als auch innerhalb der POI-Stapel navigieren kann und wobei das System derart konfiguriert ist, dass bei Auswahl eines ersten POI-Stapels mit einer in dem POI-Stapel enthaltenen Menge an POIs durch den Nutzer, die Darstellung der virtuellen Umgebung automatisch derart skaliert wird, dass in dem ersten POI-Stapel enthaltene POIs auf einer Bildschirmfläche so dargestellt werden, dass einzelne POIs bei korrekter Positionierung in der virtuellen Umgebung eine Mindestgröße und einen Mindestabstand zu jeweiligen Nachbar-POIs wahren, und falls der Mindestabstand nicht einzuhalten ist, eine Teilmenge der Menge an POIs des ersten POI-Stapels in Abhängigkeit der jeweiligen Position der einzelnen POIs in der virtuellen Umgebung in mindestens einem zweiten POI-Stapel zusammengefasst werden und wobei das System weiterhin dazu konfiguriert ist, den Mindestabstand in Abhängigkeit eines Schwellenwertes zu bilden, welcher dynamisch und in Abhängigkeit der verfügbaren Bildschirmfläche und der Gesamtanzahl darzustellender POIs zu errechnen ist.

8. System nach Anspruch 7, bei dem eine jeweilige Position eines jeweiligen Nutzers durch einen GPS-Empfänger zu ermitteln und an das System zu übertragen ist.

9. System nach Anspruch 7 zur Ausführung eines Verfahrens nach einem der Ansprüche 1 bis 6.

## Claims

1. Method for the resolution and operation of POI stacks in a virtual environment represented on a screen surface, wherein on selecting a first POI stack with an amount of POIs contained in the POI stack by a user of the screen surface, the representation of the virtual environment is automatically scaled so that POIs contained in the first POI stack are represented on the screen surface in such a way that individual POIs when correctly positioned in the virtual environment maintain a minimum size and a minimum distance to the respective adjacent POIs, and if the minimum distance cannot be maintained then a subset of the amount of POIs of the first POI stack is, depending on the respective position of the individual POIs in the virtual environment, subsumed in at least a second POI stack, wherein the minimum distance is formed depending on a threshold value, which is calculated dynamically and depending on the available screen surface and on the total number of POIs to be represented.

2. Method according to one of claims 1, wherein a selection of the POIs takes place in the same control logic as is used for a navigation in the virtual environment.

3. Method according to one of claims 1 and 2, wherein the POIs of the first POI stack are represented in abstract form if the scaling of the representation of the virtual environment is insufficient for a representation of the POIs in their respective position in the virtual environment.

4. Method according to one of claims 1 to 3, wherein the POI located closest to a position indicator is preselected and this preselection is represented by a changed crosshair.

5. Method according to one of claims 1 to 4, wherein in order to illustrate a selection of a POI an optical and logic connection between a selection tool and the selected POI is represented.

6. Method according to one of claims 1 to 5, wherein a route guide to a selected POI is started by user initiation.

7. System for the resolution and operation of POI stacks in a virtual environment, wherein the system includes at least one display medium for representing a virtual environment as well as POIs contained thereon and a device for inputting user instructions, wherein a user can operate the system by means of the device and by means of a control logic can navigate through the geographical map as well as within the POI stack, and wherein the system is configured so that on selection by the user of a first POI stack with a number of POIs contained in the POI stack, the representation of the virtual environment is automatically scaled in such a way that POIs contained in the first POI stack are represented on a screen surface so that individual POIs when in the correct position in the virtual environment maintain a minimum size and a minimum distance to the respective adjacent POIs, and if the minimum distance is not maintained, depending on the respective position of the individual POIs in the virtual environment, a partial amount of the number of POIs of the first POI stack is subsumed in at least a second POI stack, and wherein the system is furthermore configured so as to form the minimum distance depending on a threshold value, which is calculated dynamically and depending on the available screen surface and on the total number of POIs to be represented.

8. System according to claim 7, in which a respective position of a respective user is determined by a GPS receiver and is relayed to the system.

9. System according to claim 7 for implementing a method according to one of claims 1 to 6.

## Revendications

1. Procédé pour la résolution et la commande de piles de points d'intérêt POI dans un environnement virtuel représenté sur une surface d'écran, dans lequel, lors de la sélection d'une première pile de POI avec un ensemble de POI contenu dans la pile de POI par un utilisateur de la surface d'écran, la représentation de l'environnement virtuel est automatiquement mise à l'échelle de manière à représenter sur la surface d'écran des POI contenus dans la première pile de POI de telle sorte que des POI individuels, en cas de positionnement correct dans l'environnement virtuel, conservent une dimension minimale et une distance minimale à des POI voisins respectifs et que, si la distance minimale ne peut être respectée, un sous-ensemble de l'ensemble de POI de la première pile de POI soit regroupé en fonction de la position respective des POI individuels dans l'environnement virtuel en au moins une deuxième pile de POI, dans lequel la distance minimale est formée en fonction d'une valeur de seuil qui est calculée de manière dynamique et en fonction de la surface d'écran disponible et du nombre total de POI à représenter.

2. Procédé selon l'une quelconque des revendications 1, dans lequel une sélection des POI s'effectue dans la même logique de commande que celle utilisée pour une navigation dans l'environnement virtuel.

3. Procédé selon l'une quelconque des revendications 1 ou 2, dans lequel les POI de la première pile de POI sont représentés sous forme abstraite si la mise à l'échelle de la représentation de l'environnement virtuel est insuffisante pour une représentation des POI dans leur position respective dans l'environnement virtuel.

4. Procédé selon l'une quelconque des revendications 1 à 3, dans lequel le POI le plus proche d'un indicateur de position est présélectionné et cette présélection est représentée par un réticule modifié.

5. Procédé selon l'une quelconque des revendications 1 à 4, dans lequel, pour illustrer une sélection d'un POI, on représente une liaison optique et logique entre un outil de sélection et le POI sélectionné.

6. Procédé selon l'une quelconque des revendications 1 à 5, dans lequel, à la demande d'un utilisateur, un guidage d'itinéraire vers un POI sélectionné est démarré.

7. Système de résolution et la commande de piles de POI dans un environnement virtuel, dans lequel le système comprend au moins un moyen d'affichage pour représenter un environnement virtuel ainsi que des POI contenus dans celui-ci et un dispositif pour l'entrée d'instructions d'utilisateur, dans lequel un utilisateur peut commander le système au moyen du dispositif et peut naviguer au moyen d'une logique de commande aussi bien dans la carte géographique qu'à l'intérieur de la pile de POI, et dans lequel le système est configuré de telle sorte que, lors de la sélection d'une première pile de POI avec un ensemble de POI contenu dans la pile de POI par l'utilisateur, la représentation de l'environnement virtuel soit automatiquement mise à l'échelle de manière à représenter sur une surface d'écran des POI contenus dans la première pile de POI de telle sorte que des POI individuels, en cas de positionnement correct dans l'environnement virtuel, conservent une dimension minimale et une distance minimale à des POI voisins respectifs et que, si la distance minimale ne peut être respectée, un sous-ensemble de l'ensemble de POI de la première pile de POI soit regroupé en fonction de la position respective des POI individuels dans l'environnement virtuel en au moins une deuxième pile de POI, et dans lequel le système est aussi configuré pour former la distance minimale en fonction d'une valeur de seuil qui est calculée de manière dynamique et en fonction de la surface d'écran disponible et du nombre total de POI à représenter.

8. Système selon la revendication 7, où une position respective d'un utilisateur respectif doit être déterminée par un récepteur GPS et doit être transmise au système.

9. Système selon la revendication 7 pour la mise en oeuvre d'un procédé selon l'une quelconque des revendications 1 à 6.
